# EUROPEAN PATENT APPLICATION

(11) **EP 3 920 369 A1**
(43) Date of publication of application: **08.12.2021**
(21) Application number: 21171922.4
(22) Date of filing: 04.05.2021
(51) Int. Cl.: H02J 9/06, H02J 7/00

(54) **EMERGENCY LIGHTING DEVICE FOR SUPPLYING EMERGENCY LIGHTING MEANS**

(30) Priority: 04.06.2020 GB 202008414
(71) Applicant: Tridonic GmbH & Co. KG, 6851 Dornbirn (AT)
(72) Inventor: Santiago, Alekssander, 6850 Dornbirn (AT)
(74) Representative: Rupp, Christian

(57) **Abstract**

The invention relates to an emergency lighting device for supplying emergency lighting means, comprising: output terminals for supplying the emergency lighting means, at least a first battery and a second battery, a charging circuitry for charging the at least first battery and the second battery off a mains voltage supplied to the emergency lighting device; a driver circuitry configured to drive the emergency lighting means off the at least first battery and the second battery by supplying power to the output terminals; and a switching circuitry designed to connect at least the first battery and the second battery in series when the charging circuitry charges the batteries, and connect at least the first battery and the second battery in parallel when the driver circuitry drives the emergency lighting means off the batteries.

## Description

### TECHNICAL FIELD OF THE INVENTION

The invention relates to an emergency lighting device for supplying emergency lighting means. The invention further relates to a method for operating an emergency lighting device.

### BACKGROUND OF THE INVENTION

Lithium ion batteries offer, among others, long life, relatively high operating temperature, high number of charging cycles, high energy density, and high charge and discharge currents. However, higher costs and more complex charging methods arise, requiring more complex circuits and logics to ensure safe usage.

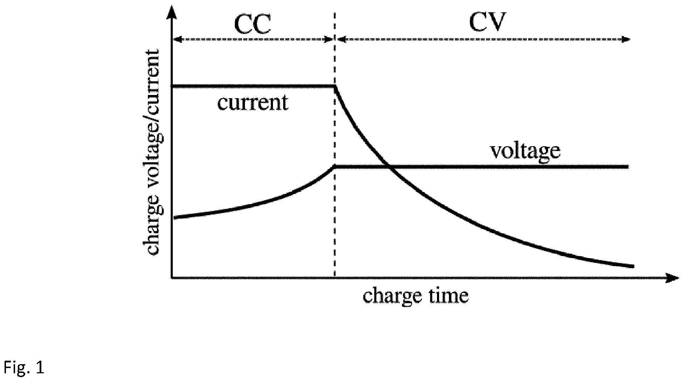

There are several charging methods used for lithium ion batteries. Each manufacturer has recommendations for charging methods that aim to prolong the life of the battery. Nevertheless, one of the most widely used methods that is used as basis for all charging methods is the so-called Constant Current - Constant Voltage (CC-CV) method, as depicted in Fig. 1.

As schematically shown in Fig. 1, for a period of time, while the battery voltage is below a certain level, the charger imposes a constant (feed-back regulated) charging current. When the battery voltage reaches a defined value, the charger enters constant (i.e., feedback-regulated) voltage mode. From that point, the charge current starts to drop, while the battery voltage increases. When the battery voltage matches the charger voltage, the current will be very low, near to 0 A, point at which the battery is considered fully charged. Some methods still have trickle charge mode with periodic CV periods in order to ensure that the battery is fully charged.

This method requires some logics to be implemented. Dedicated IC's or microcontrollers are normally used to control the charging circuit in order to implement it, thus, disadvantageously, increasing the system costs.

Therefore, there is a large variety of lithium chargers, from dedicated IC's to more intelligent solutions based on microcontrollers and they can generally be separated into two groups: linear and switched regulators. All require some level of intelligence to implement CC/CV charging method that lithium ion batteries require.

However, linear chargers are less efficient, while switched regulators represent a more expensive solution. In particular, linear chargers require low voltages to minimize the losses.

Therefore, some disadvantages of prior art solutions are mentioned in the following: low efficiency of linear chargers, low voltages rail for linear chargers, necessity for some intelligence in the charger to implement the CC-CV method.

Thus, it is an objective of this invention to provide an improved emergency lighting device for supplying emergency lighting means, wherein the emergency lighting device comprises, for example, lithium ion batteries.

### SUMMARY OF THE INVENTION

The object of the present invention is achieved by the solution provided in the enclosed independent claims. Advantageous implementations of the present invention are further defined in the dependent claims.

According to a first aspect, the invention relates to an emergency lighting device for supplying emergency lighting means, comprising:
- output terminals for supplying the emergency lighting means, at least a first battery and a second battery;
- a charging circuitry for charging the at least first battery and the second battery off a mains voltage supplied to the emergency lighting device;
- a driver circuitry configured to drive the emergency lighting means off the at least first battery and the second battery by supplying power to the output terminals; and
- a switching circuitry designed to connect at least the first battery and the second battery in series when the charging circuitry charges the batteries, and connect at least the first battery and the second battery in parallel when the driver circuitry drives the emergency lighting means off the batteries.

In the following, some advantages of the emergency lighting device are given: self-regulating charger, no need for logics to control the charge, very cheap to implement and it implements CC-CV method by it self-regulating nature. Moreover, series charge and parallel discharge means more efficient charger and higher discharge current. There is no zero-volt rail, as the minimum rail voltage is the battery voltage. This makes the changeover to emergency easier and guarantees unlimited save time if the device has this capability. Furthermore, self-balancing in discharge is achieved. If the batteries are not balanced in terms of voltage, the battery with higher voltage will deliver more current until they are balanced. It also works with uneven batteries. If one battery has more cells than the other, the voltage will drop lower in that battery, meaning it will deliver more current.

According to an embodiment, the switching circuitry comprises passive elements only.

According to an embodiment, the switching circuitry comprises a plurality of diodes.

According to an embodiment, the switching circuitry is designed to change the status of the device, upon failure of the mains voltage supplied to the device, from the charging circuitry charging the batteries to the driver circuitry driving the emergency lighting means, without feeding a mains detection signal to an integrated circuitry.

According to an embodiment, the switching circuitry is designed to change the status of the device, upon failure of the mains voltage supplied to the device, from the charging circuitry charging the batteries to the driver circuitry driving the emergency lighting means, without feeding a mains detection signal to a circuitry with active circuitry elements.

According to an embodiment, the emergency lighting means comprises an LED module.

According to an embodiment, at least the first and the second battery are respectively lithium batteries.

According to a second aspect, the invention relates to a method for operating an emergency lighting device, comprising:
- supplying emergency lighting means,
- charging at least a first battery and a second battery off a mains voltage supplied to the emergency lighting device;
- driving the emergency lighting means off at least the first battery and second battery by supplying power to output terminals;
- connecting at least the first battery and the second battery in series when the charging circuitry charges the batteries, and
- connecting the at least first battery and the second battery in parallel when the driver circuitry drives the emergency lighting means off the batteries.

According to an embodiment of the second aspect, the method further comprises changing the status of the device, upon failure of the mains voltage supplied to the device, from the charging circuitry charging the batteries to the driver circuitry driving the emergency lighting means, without feeding a mains detection signal to an integrated circuitry.

According to an embodiment of the second aspect, the method further comprises changing the status of the device, upon failure of the mains voltage supplied to the device, from the charging circuitry charging the batteries to the driver circuitry driving the emergency lighting means, without feeding a mains detection signal to a circuitry with active circuitry elements.

The method of the second aspect and its respective implementation forms provide the same advantages and effects as described above for the device of the first aspect and its respective implementation forms.

### BRIEF DESCRIPTION OF THE DRAWINGS

The invention will be explained in the followings together with the figures.
- Fig. 1: shows an exemplary behavior of a charge voltage or current over charge time of a battery according to prior art;
- Fig. 2: shows an exemplary embodiment of an emergency lighting device for supplying emergency lighting means according to the invention;
- Fig. 3: shows an embodiment of a switching circuitry allowing serial charging and parallel discharging of two batteries in an emergency lighting device, wherein in this embodiment only passive components are used;
- Fig. 4: shows an embodiment of an emergency lighting device for supplying emergency lighting means according to the invention;
- Fig. 5: shows an embodiment of a behavior of a battery current in emergency lighting means according to the invention; and
- Fig. 6: shows an embodiment of a method for operating an emergency lighting device according to the invention.

### DETAILED DESCRIPTION OF THE PREFERRED EMBODIMENTS

Aspects of the present invention are described herein in the context of an emergency lighting device for supplying emergency lighting means.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of an emergency lighting device will be presented. However, as those skilled in the art will readily appreciate, these aspects may be extended to aspects of emergency lighting devices without departing from the invention.

The term "LED luminaire" shall mean a luminaire with a light source comprising one or more LEDs or OLEDs. LEDs are well-known in the art, and therefore, will only briefly be discussed to provide a complete description of the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

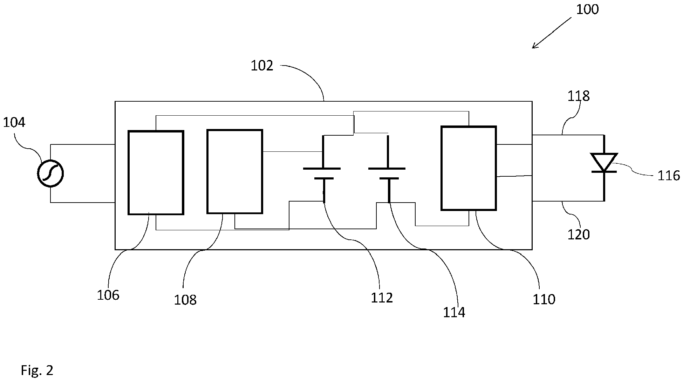

Now referring to Fig. 2, an exemplary embodiment of a system 100 comprising an emergency lighting device 102 for supplying emergency lighting means 116 according to the invention is shown.

The emergency lighting device 102 comprises:
- output terminals 118, 120 for supplying the emergency lighting means 116 with electric power, preferably with a feedback-regulated current or voltage;
- at least a first battery 112 and a second battery 114, which are preferably batteries within the housing of the emergency lighting device 102;
- a charging circuitry 106 for charging the at least first battery 112 and the second battery 114 off a AC mains voltage 104 supplied to the emergency lighting device 102;
- a driver circuitry 110 configured to drive the emergency lighting means 116 off the at least first battery 112 and the second battery 114 by supplying power to the output terminals 118, 120; and
- a switching circuitry 108 designed to connect at least the first battery 112 and the second battery 114 (functionally) in series when the charging circuitry 106 charges the batteries 112, 114, and connect at least the first battery 112 and the second battery 114 (functionally) in parallel when the driver circuitry 110 drives the emergency lighting means 116 off the batteries, preferably upon mains failure.

Through the series charge and parallel discharge of the batteries, higher charge efficiency is achieved. Moreover, there is no need for intelligent circuits to monitor and control the charge. Furthermore, this solution is cheaper than using switching regulators. Moreover, a higher rail (higher than a linear charger would need to be efficient) allows better supply for other circuits that require higher voltages to operate, such as lamp drivers.

Therefore, embodiments of the invention provide a cheaper solution than the switching regulators, since they do not require specialized IC or microcontrollers to run properly.

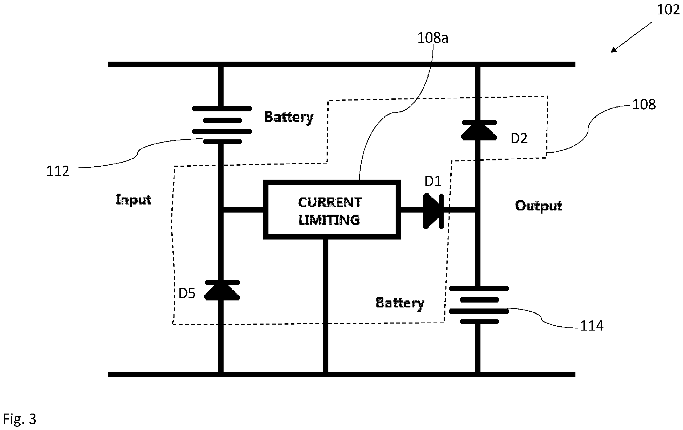

Fig. 3 shows an embodiment of a switching circuitry 108 allowing serial charging and parallel discharging of two batteries 12, 114 in an emergency lighting device 102, wherein in this embodiment only passive components are used.

In this embodiment, the switching circuitry 108 comprises a current limiting unit 108a and diodes D1, D2 and D5. The current limiting unit 108a can comprise passive elements only such as a series of a resistor and a diode (not shown in Fig. 3).

In an embodiment, the switching circuitry 108 is configured to switch the functional connection of the two batteries 112, 114 from series, during charging off mains voltage 104, to parallel, during discharging of the two batteries 112, 114 in order to drive emergency lighting means 116 automatically (i.e., without monitoring the mains voltage by an active circuitry), upon mains 104 failure.

The diodes can increase the power factor and improve harmonic distortion in power supply circuits.

Moreover, in power supplies or any other device that requires DC voltage, from an AC supply, diode rectifiers D1, D2 and D5 can be used to convert AC voltage into DC voltage, with some acceptable ripple. These circuits are quite effective to obtain a steady DC voltage but they naturally have low power factor and high current harmonic distortion.

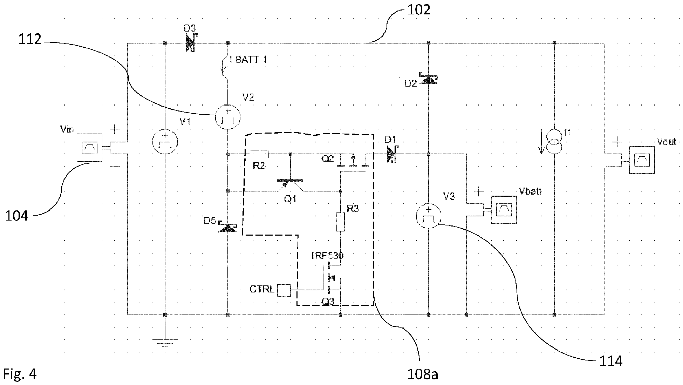

Fig. 4 shows an embodiment of an emergency lighting device 102 for supplying emergency lighting means 116 according to the invention.

In the embodiment shown in Fig. 4, V1 is the fixed or variable voltage source, such as a flyback converter output, V2 and V3 represent the batteries 112 and 114, D1, D2 and D5 are the diodes, I1 represents a fixed current load, such as LED load. The resistors R2, R3, and the transistors Q1, Q2 and Q3 represent the current limiting circuit 108a or charge interruption circuit.

In this embodiment, when the mains supply 104 is active and a rectified (and isolated) DC voltage V1 is present, a charging current will flow through the batteries V2 (112) and V3 (114), while they are effectively connected in series, as shown in Fig. 4. The diodes D2 and D5 block any DC current flowing to ground. The current limiting circuit 108a is used to limit the charge current. This current limiting circuit 108a does not operate or interfere with the discharge.

When the mains 104 fail and the voltage V1 is no longer supplied, seamlessly the batteries V2, V3 will take over the supply at the rail Vₒᵤₜ for supplying the emergency lighting devices 116, without needing smart electronics for this switchover from mains supply to battery supply. The battery voltage will automatically start supplying the power to the rail Vₒᵤₜ.

In an embodiment, the two (or more) batteries V2, V3 are essentially functionally connected in series, during charge mode. However, during a discharge mode, the batteries V2, V3 are functionally connected in parallel, thus avoiding that one of the batteries is discharged faster than the other one.

Therefore, two batteries V2 and V3 are provided, which are charged while the mains 104 is present functionally in series while they are discharged (upon mains failure), while they are functionally arranged in parallel. Further, the handover from mains supply 104 and charging of the batteries V2 and V3 to the discharging of the batteries V2 and V3 for emergency situations is done without additional microcontroller ASIC.

If the batteries voltage is below a certain level, current will flow and charge them, current limiting circuit will clamp the current to a maximum value, defined by R2 value(Imax = 0.7/R2). As the battery voltage increases, the current will naturally start to decrease until it reached 0 A. The voltage value V1 can be controlled (variable) or can be fixed. If fixed, V1 should be such as when the batteries 112 (V2), 114 (V3) are fully charged, the current will be in fact 0 A. When the voltage V1 is removed, exemplifying the mains 104 failure, both batteries V2 and V3 voltages (in parallel) are presented in the output immediately available to be used by the load. The diodes D1, D2 and D5 can be Schottky diodes on first order to minimize losses.

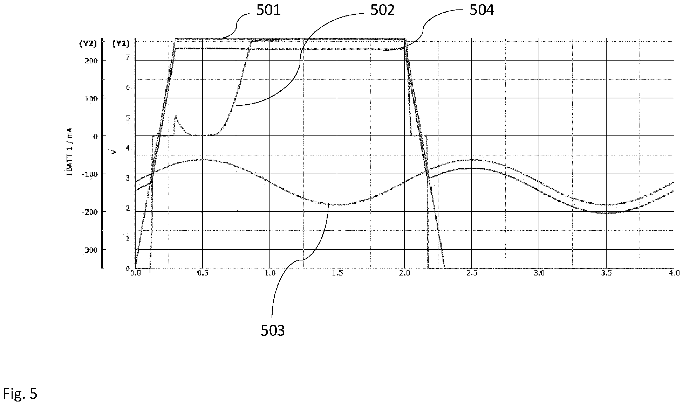

In an embodiment, the previous circuit was simulated, without Q3. In this simulation, as shown in Fig.5, the input voltage 501 rises and falls, representing the presence and absence of the supply. The battery current 502 is negative while the input voltage is below the individual battery voltage 503. When this threshold is crossed, the current is 0 A, as the supply voltage is not high enough to trigger the charge. When the supply crosses the battery voltages threshold (series) and D1 and R2 drop, the current starts to rise. The individual battery voltage is simulated as a sinusoid in order to emulate the battery charge. When the battery voltage approaches the maximum the charge current drops to 0 A. When the battery voltage starts reducing, the charge current increases until it is clamped by the clamping circuit.

The output voltage 504 follows the input voltage when it is higher than each individual battery voltage and follows the battery voltage when the input voltage is below each individual battery voltage. The difference between the curve 504 to curves 501 and 503 is determined by the diode drops.

In this simulation, the input voltage maximum value is tuned as it is a fixed voltage.

This shows that the circuit operated as expected. When the battery voltage reaches its maximum, the circuit turns the charge off by itself.

In the following, some advantages of the above embodiments are given: self-regulating charger, no need for logics to control the charge, very cheap to implement and it implements CC-CV method by it self-regulating nature. Moreover, series charge and parallel discharge means more efficient charger and higher discharge current. There is no zero-volt rail, as the minimum rail voltage is the battery voltage. This makes the changeover to emergency easier and guarantees unlimited save time if the device has this capability. Furthermore, self-balancing in discharge is achieved. If the batteries are not balanced in terms of voltage, the battery with higher voltage will deliver more current until they are balanced. It also works with uneven batteries. If one battery has more cells than the other, the voltage will drop lower in that battery, meaning it will deliver more current.

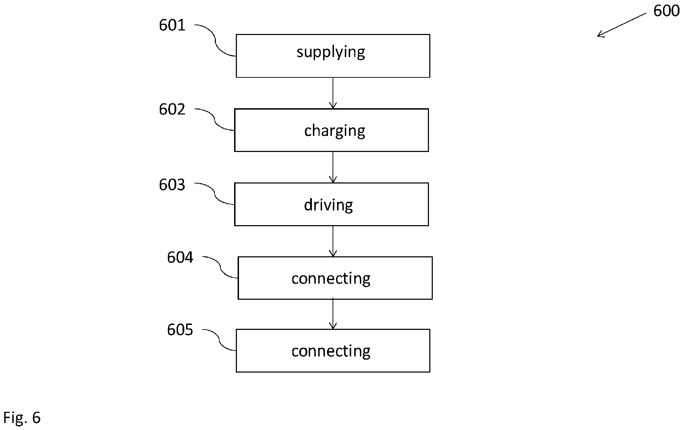

Fig. 6 shows an embodiment of a method 600 for operating an emergency lighting device 102 according to the invention.

The method 600 for operating an emergency lighting device 102 comprises the steps of:
- supplying 601 emergency lighting means 116;
- charging 602 at least a first battery 112 and a second battery 114 off a mains voltage 104 supplied to the emergency lighting device 102;
- driving 603 the emergency lighting means 116 off at least the first battery 112 and second battery 114 by supplying power to output terminals 118, 120;
- connecting 604 at least the first battery 112 and the second battery 114 in series when the charging circuitry 106 charges the batteries, and
- connecting 605 the at least first battery 112 and the second battery 114 in parallel when the driver circuitry 110 drives the emergency lighting means 116 off the batteries.

All features of all embodiments described, shown and/or claimed herein can be combined with each other.

While various embodiments of the present invention have been described above, it should be understood that they have been presented by way of example only and not limitation. Numerous changes to the disclosed embodiments can be made in accordance with the disclosure herein without departing from the spirit of scope of the invention. Thus, the breadth and scope of the present invention should not be limited by any of the above-described embodiments. Rather, the scope of the invention should be defined in accordance with the following claims and their equivalence.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

## Claims

1. Emergency lighting device (102) for supplying emergency lighting means (116), comprising:
- output terminals (118, 120) for supplying the emergency lighting means (116),
- at least a first battery (112) and a second battery (114),
- a charging circuitry (106) for charging the at least first battery (112) and the second battery (114) off a mains voltage (104) supplied to the emergency lighting device (102);
- a driver circuitry (110) configured to drive the emergency lighting means (116) off the at least first battery (112) and the second battery (114) by supplying power to the output terminals (118, 120); and
- a switching circuitry (108) designed to connect at least the first battery (112) and the second battery (114) in series when the charging circuitry (106) charges the batteries (112, 114), and connect at least the first battery (112) and the second battery (114) in parallel when the driver circuitry (110) drives the emergency lighting means (116) off the batteries.

2. The emergency lighting device (102) of claim 1, wherein the switching circuitry (108) comprises passive elements only.

3. The emergency lighting device (102) of claim 1 or 2, wherein the switching circuitry (108) comprises a plurality of diodes.

4. The emergency lighting device (102) of any of the preceding claims,
wherein the switching circuitry (108) is designed to change the status of the device (102), upon failure of the mains voltage (104) supplied to the device (102), from the charging circuitry (106) charging the batteries (112, 114) to the driver circuitry (110) driving the emergency lighting means (116), without feeding a mains detection signal to an integrated circuitry.

5. The emergency lighting device (102) of any of the preceding claims,
wherein the switching circuitry (108) is designed to change the status of the device (102), upon failure of the mains voltage (104) supplied to the device (102), from the charging circuitry (106) charging the batteries (112, 114) to the driver circuitry (110) driving the emergency lighting means (116), without feeding a mains detection signal to a circuitry with active circuitry elements.

6. The emergency lighting device (102) of any one of the preceding claims, wherein the emergency lighting means (116) comprises an LED module.

7. The emergency lighting device (102) of any one of the preceding claims, wherein at least the first battery (112) and the second battery (114) are respectively lithium batteries.

8. A method (600) for operating an emergency lighting device (102), comprising:
- supplying (601) emergency lighting means (116),
- charging (602) at least a first battery (112) and a second battery (114) off a mains voltage (104) supplied to the emergency lighting device (102);
- driving (603) the emergency lighting means (116) off at least the first battery (112) and second battery (114) by supplying power to output terminals (118, 120);
- connecting (604) at least the first battery (112) and the second battery (114) in series when the charging circuitry (106) charges the batteries, and
- connecting (605) the at least first battery (112) and the second battery (114) in parallel when the driver circuitry (110) drives the emergency lighting means (116) off the batteries.

9. The method (600) of any of the preceding claims 10 to 12, wherein the method (600) further comprises:
- changing the status of the device (102), upon failure of the mains voltage (104) supplied to the device (102), from the charging circuitry (106) charging the batteries (112, 114) to the driver circuitry (110) driving the emergency lighting means (116), without feeding a mains detection signal to an integrated circuitry.

10. The method (600) of any of the preceding claims 10 to 13, wherein the method (600) further comprises:
- changing the status of the device (102), upon failure of the mains voltage (104) supplied to the device (102), from the charging circuitry (106) charging the batteries (112, 114) to the driver circuitry (110) driving the emergency lighting means (116), without feeding a mains detection signal to a circuitry with active circuitry elements.
